# EUROPÄISCHE PATENTSCHRIFT

(11) **EP 0 536 559 B1**
(45) Veröffentlichungstag und Bekanntmachung des Hinweises auf die Patenterteilung: **12.07.1995**
(21) Anmeldenummer: 92115649.3
(22) Anmeldetag: 14.09.1992
(51) Int. Cl.: A23G 3/04, A23G 3/02

(54) **Verfahren und Vorrichtung zur Wärmebehandlung einer pumpbaren Süsswarenmasse**
Process and device for the heat treatment of a pumpable candy mass
Procédé et appareil pour le traitement thermique d'une masse de confiserie pompable

(30) Priorität: 16.09.1991 DE 4130721
(43) Veröffentlichungstag der Anmeldung: 14.04.1993
(73) Patentinhaber: Klöckner Hänsel GmbH, 30024 Hannover (DE)
(72) Erfinder: Mergelsberg, Reinhard, 3008 Garbsen (DE); Pamp, Wolfgang, W-4902 Bad Salzuflen (DE); de Vilchez-Kehr, Jose-Maria, 3000 Hannover (DE)
(74) Vertreter: Rehberg, Elmar, Dipl.-Ing.

(56) Entgegenhaltungen:
- EP-A- 0 272 437
- EP-A- 0 348 696
- DATABASE WPI Week 7749, Derwent Publications Ltd., London, GB; AN 77-87902Y(49)DATABASE WPI Week 8036, Derwent Publications Ltd., London, GB; AN 80-62365C(36)
- DATABASE WPIL Week 8350, Derwent Publications Ltd., London, GB; AN 83-843440(50)

## Beschreibung

Die Erfindung bezieht sich auf ein Verfahren zur Wärmebehandlung einer pumpbaren Süßwarenmasse, insbesondere Milchkaramelmasse, die durch die Heizschlange eines einen dampfbeheizten Raum aufweisenden Wärmetauschers gefördert wird, wobei der zu behandelnden Süßwarenmasse bei Eintritt in den Wärmetauscher ein Medium zugegeben und die aus dem Wärmetauscher austretende Süßwarenmasse in einen Auffangbehälter geleitet wird, in welchem das Medium aus der Süßwarenmasse entweichen kann. Die Vorrichtung zur Durchführung des Verfahrens arbeitet mit einem eine Heizschlange aufweisenden dampfbeheizten Wärmetauscher und einem nachgeschalteten Auffangbehälter für die Süßwarenmasse.

Ein Verfahren der eingangs beschriebenen Art ist aus der DE-PS 36 41 223 bekannt. Der zu behandelnden Süßwarenmasse wird bei Eintritt in den Wärmetauscher ein Gas als Medium zugegeben. Dieses Gas wird homogen mit der Süßwarenmasse vermischt und das Gemisch wird schließlich durch den Wärmetauscher geführt wird. Durch das Einführen des Gases vergrößert sich das Volumen der Süßwarenmasse, so daß sich aufgrund der veränderten Mengenverhältnisse ein besserer Wärmeübergang ergibt. Durch das eingeleitete Gas entstehen in der Masse Turbulenzen, die dafür sorgen, daß die Masse innerhalb des Wärmetauschers dauernd gemischt wird, so daß die an der Wand des Wärmetauschers von der Masse aufgenommene Wärme sofort abgeführt wird. Dies zielt darauf ab, der Gefahr zu begegnen, daß die zu erwärmende Süßwarenmasse zumindest teilweise anbrennt und verdirbt.

Dennoch beobachtet man bei der schonenden Behandlung besonders temperaturempfindlicher Süßwarenmasse, wie z. B. bei der Herstellung von Milchkaramelmassen, in Abhängigkeit von der Milchzusammensetzung, dem Milchanteil in der Gesamtmasse und der Lage des Temperaturniveaus, daß Milchanbrennungen im Innern der Heizschlange des Wärmetauschers auftreten. Diese Anbrennungen und Ansetzungen von Massen bzw. Massenbestandteilen treten hauptsächlich am Anfang der Heizschlange im Wärmetauscher auf, während sie im Endbereich der Heizschlange, also dem dem Auffangbehälter zugekehrten Bereich kaum oder gar nicht beobachtet werden.

Andererseits ist es bekannt, in den Heizschlangen verschiedene Einbauten anzuordnen, welche zu einer erhöhten Wirbel- bzw. Turbulenzbildung der Süßwarenmasse innerhalb der Heizschlange führen, wodurch die Wärmeübertragung ebenfalls verbessert wird. Nachteilig ist hierbei, daß an den Einbauten häufig Toträume entstehen, in denen die Süßwarenmasse unkontrolliert lange verweilt und dadurch verbrennen kann. Die Reinigung derartig ausgebildeter Heizschlangen ist nur sehr schwierig möglich und erfordert einen erheblichen Aufwand, wobei der Erfolg nicht zu garantieren ist. Abgesehen hiervon läßt sich die Wirbelbildung während des Betriebs nicht verändern, so daß eine Steuerung dieses Vorgangs nicht möglich ist.

Aus der DE-PS 38 21 505 ist ein Verfahren zur kontinuierlichen Herstellung von Hartbonbonmassen aus einer wässrigen Lösung von Einsatzstoffen bekannt, bei dem ebenfalls in einem eine Heizschlange aufweisenden Wärmetauscher die Süßwarenmasse erwärmt wird. In einem nachgeschalteten Auffangbehälter ist ein Ausdampfraum vorgesehen, in welchem Brüden abgezogen werden können. Die Masse wird dann über ein Einstellventil in einen Vakuumraum überführt, in welchem entsprechend dem herrschenden Unterdruck eine Nachausdampfung stattfindet. Nachgeschaltete Einrichtungen ermöglichen die Zugabe von Aromen, das Herausführen der Masse aus der Vorrichtung und die Weiterverarbeitung der Süßwarenmasse. Der am Vakuumraum anliegende Unterdruck wirkt sich auch über den Ausdampfraum des Auffangbehälters bis in die Heizschlange des Wärmetauschers aus, so daß die Anreicherung der Trockensubstanz der Süßwarenmasse bei vergleichbar niedrigerer Temperatur durchgeführt werden kann. Die Probleme des Anbrennens temperaturempfindlicher Süßwarenmassen in der Heizschlange wird hier nicht angesprochen.

Der Erfindung liegt die Aufgabe zugrunde, ein Verfahren und eine Vorrichtung zur schonenden Wärmebehandlung auch temperaturempfindlicher Süßwarenmassen in einem dampfbeheizten Wärmetauscher aufzuzeigen, wobei das Auftreten von Anbrennerscheinungen und Ablagerungen in der Heizschlange des Wärmetauschers zumindest in signifikanter Weise hinausgezögert, wenn nicht gar gänzlich vermieden wird.

Erfindungsgemäß wird beim Verfahren der eingangs beschriebenen Art der Süßwarenmasse als Medium Wasserdampf hinzugefügt, durch dessen Kondensation die Temperatur der Süßwarenmasse bis mindestens in den Bereich ihrer Siedetemperatur, vorzugsweise über ihre Siedetemperatur, angehoben wird. Während im Stand der Technik zwecks Vergrößerung des durch die Heizschlange des Wärmetauschers geführten Volumens ein Gemisch aus Süßwarenmasse und Gas Anwendung findet, wird jetzt als Medium Wasserdampf hinzugefügt, also eine Flüssigkeit, die sich lediglich im dampfförmigen Aggregatzustand befindet und die Eigenschaft aufweist, durch eine Kondensation erhebliche Wärmemengen schnell und einfach zu übertragen, ohne daß dabei das Volumen des Gemischs aus Süßwarenmasse und kondensiertem Wasserdampf nennenswert erhöht wird. Die Süßwarenmasse wird also vor Eintritt in die Heizschlange des Wärmetauschers, beispielsweise ausgehend von Raumtemperatur, in einem Behälter oder einem Zufuhrrohr gezielt und schnell mindestens bis in den Bereich der Siedetemperatur der Süßwarenmasse erhöht, damit möglichst die gesamte innere Oberfläche der Heizschlange des Wärmetauschers von dem Siedevorgang der Süßwarenmasse bzw. des Gemischs aus Süßwarenmasse und Wasser, erfaßt wird. Die beim Siedevorgang typische Blasenbildung, die von der inneren Oberfläche der Heizschlange ausgeht, wird gezielt als mechanische Maßnahme genutzt, einzelne Massenpartikel immer wieder von der Innenwandung weg in den Strom der Süßwarenmasse hineinzubewegen und damit einer in umgekehrter Richtung ablaufenden Ablagerung entgegenzuwirken. Während bisher der Siedevorgang der Süßwarenmasse an irgendeiner Stelle zwischen dem Eingang und dem Ausgang der Heizschlange des Wärmetauschers einsetzte, wird der Beginn des Siedevorgangs jetzt zumindest in den Bereich des Eingangs der Heizschlange des Wärmetauschers verlagert. Das an sich nachteilige Einbringen von zusätzlicher Feuchtigkeit, welches durch den Kondensationsvorgang ausgelöst wird, wird bewußt in Kauf genommen, um andererseits die Blasenbildung während des Siedevorgangs zu intensivieren und auszuweiten. Es sind mit dem neuen Verfahren Massen herstellbar, die durchaus in den gewünschten Trockensubstanzgehalten liegen, wie sie bisher auch erzielbar waren. Jedoch kann das Verfahren ohne Betriebsunterbrechung und ohne Auftritt von Ablagerungen zeitlich erheblich länger kontinuierlich durchgeführt werden, also dies bisher der Fall war. Es versteht sich, daß als Wasserdampf ein solcher in Lebensmittelqualität hinzugefügt wird, da der Wasserdampf unmittelbar mit der Süßwarenmasse in Berührung kommt, wenngleich er auch im wesentlichen oder zu einem sehr hohen Anteil im Auffangbehälter wieder abgeführt wird. Mit dem neuen Verfahren wird auch im Eingangsbereich der Heizschlange des Wärmetauschers eine laminare Strömung der Süßwarenmasse durch eine turbulente Strömung ersetzt, wobei die Verweilzeiten der Massepartikel an den Grenzflächen vorteilhaft sehr gering sind. Die Anbringung von Einbauten zur Erzeugung einer turbulenten Bewegung im Innern der Heizschlange entfällt völlig. Die Hinzufügung von Wasserdampf ermöglicht es in einfacher Weise, diesen Vorgang zu steuern bzw. zu regeln und Einfluß auf das gewünschte Ergebnis zu nehmen. Auch kann in einfacher Weise eine Anpassung an die jeweilige Süßwarenmasse erfolgen.

Besonders vorteilhaft ist es, wenn der Süßwarenmasse Wasserdampf in solcher Menge, Temperatur und Druck hinzugefügt wird, daß die Süßwarenmasse bereits am Anfang der Heizschlange des Wärmetauschers siedet. Der Siedevorgang ist abhängig von dem herrschenden Druck zu sehen. Der Siedevorgang erstreckt sich somit über die gesamte Fläche der Heizschlange, die somit besser ausgenutzt wird als im Stand der Technik. Dabei ist gleichzeitig der Wärmeübergang verbessert.

Der Wasserdampf kann der Süßwarenmasse bevorzugt in wandnahen Bereichen hinzugefügt werden. Unter solchen wandnahen Bereichen der Süßwarenmasse werden solche Bereiche verstanden, die am Eingang der Heizschlange in den Wärmetauscher mit der inneren Oberfläche der Heizschlange in Berührung kommen. Es kann hier durchaus eine gezielte Temperaturschichtung in radialer Richtung ausgenutzt werden, um nicht übermäßig große Wassermengen über die Kondensation des Wasserdampfs einzubringen. Andererseits ist es aber auch möglich, den Wasserdampf in die Süßwarenmasse so einzubringen, daß eine homogene Vermischung entsteht.

Der Wasserdampf kann vorteilhaft in Form von Sattdampf hinzugefügt werden. Dies erbringt eine sofortige Kondensation und die größte übertragbare Wärmemenge.

Die Zufuhr des Wasserdampfs kann unter Regelung der Menge und/oder Temperatur und/oder des Drucks des Wasserdampfs erfolgen, um das Verfahren bei kontinuierlicher Durchführung zu regeln, also auf vorgegebenen Werten zu halten, die je nach Anwendungsfall mit ein und derselben Anlage in unterschiedlicher Weise durchgeführt werden können.

Zur Reduzierung der Siedetemperatur der Süßwarenmasse in der Heizschlange kann Unterdruck zur Einwirkung gebracht werden. Dieser Unterdruck kann bereits im Ausdampfraum des Auffangbehälters einwirken und sich in die Heizschlange der Fließrichtung der Süßwarenmasse entgegengerichtet fortsetzen.

Die Vorrichtung zur Durchführung des Verfahrens kennzeichnet sich erfindungsgemäß dadurch, daß am Einlaß für die Süßwarenmasse in den Wärmetauscher eine Einführeinrichtung für Wasserdampf vorgesehen ist. Diese Einrichtung kann unmittelbar vor dem Einlaß bzw. am Einlaß oder auch ein Stück stromauf des Einlasses in die Heizschlange des Wärmetauschers vorgesehen sein. Wichtig ist es, daß zumindest die wandnahen Bereiche der Süßwarenmasse etwa auf Siedetemperatur erwärmt werden, bevor sie mit der inneren Oberfläche der Heizschlange im Wärmetauscher in Berührung kommen.

Die Einführeinrichtung, der Wärmetauscher und der Auffangbehälter können als geschlossenes, unter Unterdruck stehendes System ausgebildet sein, wobei sich der Unterdruck in der Einführeinrichtung am wenigsten bemerkbar macht und in erster Linie im Auffangbehälter und in der Heizschlange auswirkt. Durch den Unterdruck wird die Siedetemperatur erniedrigt, was ebenfalls einem Verbrennen und einem Ablagern von Süßwarenmasse an der inneren Oberfläche der Heizschlange entgegenwirkt.

Es ist möglich, mehrere Wärmetauscher mit jeweils vorgeschalteten Einführeinrichtungen zum stufenweisen Erwärmen der Süßwarenmasse vorzusehen. Auch unterschiedliche Druckstufen können dabei angewendet werden, um spezielle Anforderungen zu erreichen.

Die Einführeinrichtung kann zum fein verteilten Einbringen des Wasserdampfs in die Süßwarenmasse eine Vielzahl von über Umfang und/oder Länge verteilt angeordneter Übertrittsöffnungen aufweisen, so daß die vorgesehene Aufheizung der Süßwarenmasse vor Eintritt in die Heizschlange des Wärmetauschers stattfinden kann.

Die Erfindung wird anhand bevorzugter Ausführungsbeispiele weiter erläutert und beschrieben. Es zeigen:
- Figur 1: eine schematische Darstellung der wesentlichen für die Durchführung des Verfahrens erforderlichen Vorrichtungsteile,
- Figur 2: eine zweite Ausführungsform einer möglichen Vorrichtung,
- Figur 3: eine Ausführungsform einer Einführeinrichtung für Wasserdampf und
- Figur 4: eine schematische Darstellung der wesentlichen Elemente eines zweistufigen Verfahrens.

In einem Behälter 1 befindet sich Süßwarenmasse beispielsweise bei einer Raumtemperatur zwischen 20 und 30°C. Von dem Behälter 1 führt eine Rohrleitung 2 über eine Pumpe 3 zu einer Einführeinrichtung 5, durch die die Süßwarenmasse hindurchgeführt wird. Zu der Einführeinrichtung 5 führt auch eine Leitung 4, in der Wasserdampf herangeführt wird, der in der Einführeinrichtung 5 unmittelbar mit der Süßwarenmasse in Kontakt gebracht wird, so daß die Süßwarenmasse an dieser Stelle durch die Kondensation des Wasserdampfs aufgeheizt wird. Die Rohrleitung 2 führt dann weiter von der Einführeinrichtung 5 zu einem Wärmetauscher 6, der in an sich bekannter Weise ausgebildet ist. Der Wärmetauscher 6 weist eine Heizschlange 7 auf, die sich im Einzelnen aus einer Eingangszone 8, einer Mittelzone 9 und einer Ausgangszone 10 zusammensetzt. Über eine Leitung 11 wird der Wärmetauscher mit Heizdampf beheizt. Zum Ablassen stehenden Kondensats ist ein Ablaß 12 vorgesehen.

Die Ausgangszone 10 der Heizschlange 7 des Wärmetauschers 6 ist mit einem Auffangbehälter 13 verbunden, in dessen Innern ein Ausdampfraum 14 gebildet ist. Die bei der weiteren Erhitzung der Süßwarenmasse im Wärmetauscher 6 entstehenden Brüden werden aus dem Ausdampfraum 14 des Auffangbehälters 13 über eine Brüdenrohrleitung 15 abgeführt. Die erhitzte Süßwarenmasse mit erhöhtem Trockensubstanzgehalt verläßt den Auffangbehälter 13 über eine Rohrleitung 16 und wird der weiteren Be- bzw. Verarbeitung zugeführt.

Die im Behälter 2 etwa im Bereich von Raumtemperatur vorliegende Süßwarenmasse wird in der Einführeinrichtung 5 bzw. auf ihrem Weg bis zur Eingangszone 8 der Heizschlange 7 durch die Kondensation des über die Leitung 4 hinzugefügten Wasserdampfs bis etwa in den Bereich ihrer Siedetemperatur aufgeheizt. Damit wird der Wärmetauscher 6 über die Gesamtlänge seiner Heizschlange 7 vom Siedevorgang erfaßt. Dieser ausgedehnte Vorgang verhindert das Anbrennen und Ablagern von Süßwarenmasse an der inneren Oberfläche der Heizschlange 7. Durch die intensivierte Dampfblasenbildung werden immer wieder Partikel der Süßwarenmasse aus dem Bereich der inneren Oberfläche der Heizschlange 7 in den Massestrom der Süßwarenmasse zurückbewegt, so daß Ablagerungserscheinungen entgegengewirkt wird. Je nach den herrschenden Bedingungen kann auch ein turbulenter Bewegungszustand der Süßwarenmasse vorliegen, so daß laminare Strömungsbedingungen mit ihren Nachteilen vermieden werden. Im Bereich der Ausgangszone 10 der Heizschlange 7 kann die Süßwarenmasse beispielsweise eine Temperatur von 110°C aufweisen, so daß im Ausdampfraum 14 des Auffangbehälters 13 ein weiterer Ausdampfvorgang angeschlossen wird, durch welchen der Trockensubstanzgehalt der Süßwarenmasse in der gewünschten Weise vergrößert wird.

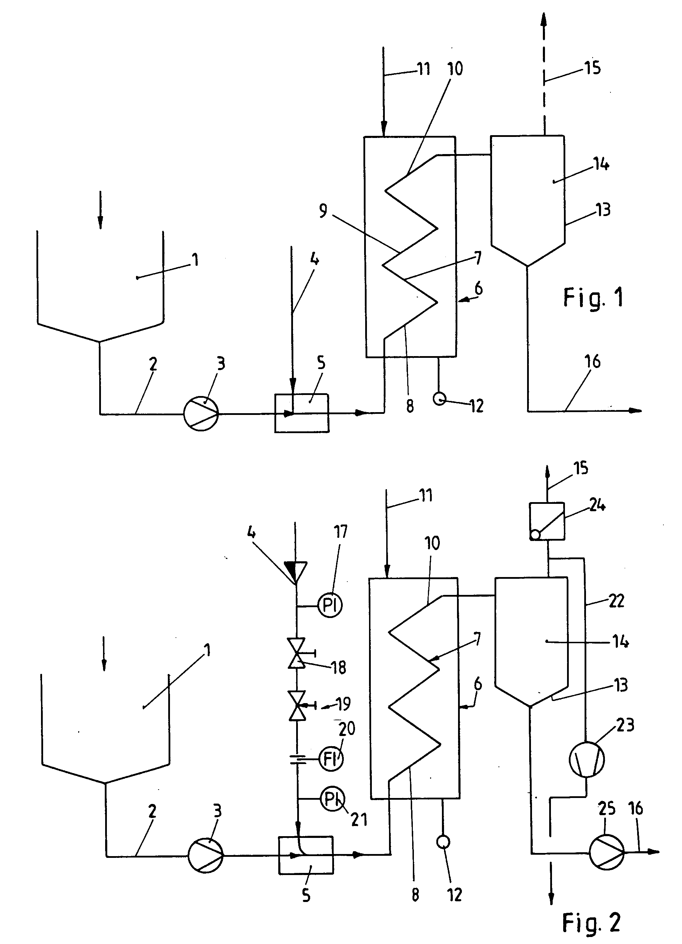

Die schematische Darstellung gemäß Figur 2 zeigt eine ganz ähnlich aufgebaute Vorrichtung mit ihren wesentlichen Bestandteilen zur Durchführung des Verfahrens. In der Leitung 4 sind für eine Regelung des Wasserdampfs verschiedene Elemente vorgesehen. Über ein Manometer 17 kann der Druck des Wasserdampfs am Eingang gemessen werden. Ein Druckregulierventil 18 gestattet die Anpassung des Drucks. Ein Dampfzufuhrventil 19 gestattet die völlige Absperrung der Leitung 4, um in der gleichen Anlage ohne Nutzung der Einführeinrichtung 5 andere Massen zu behandeln. Nachgeschaltet kann ein Dampfmengenmesser 20 und ein weiteres Manometer 21 der Einführeinrichtung 5 vorgeschaltet sein.

Mit dem Ausdampfraum 14 im Auffangbehälter 13 ist über eine Leitung 22 eine Pumpe 23 zur Erzeugung von Unterdruck angeschlossen. Der Unterdruck wirkt sich nicht nur im Ausdampfraum 14, sondern auch nach rückwärts bis in die Heizschlange 7 aus. Eine Sicherheitsabsperrvorrichtung 24 ist an der ersichtlichen Stellen in die Brüdenrohrleitung 15 eingeschaltet, um die Aufrechterhaltung des Unterdrucks zu ermöglichen. In der Rohrleitung 16 kann eine weitere Pumpe 25 zur weiteren Förderung der behandelten Süßwarenmasse vorgesehen sein.

Die auf Siedetemperatur im Bereich der Eingangszone 8 der Heizschlange 7 bereits erwärmte Süßwarenmasse wird über die zum Ausdampfraum 14 führende Rohrleitung und die Pumpe 25 aus dem Auffangbehälter 13 ausgetragen. Der Vorteil dieser Vorrichtung liegt darin, daß der zu turbulenter Strömung führende Siedevorgang bereits bei niedrigen Temperaturen einsetzt bzw. intensiviert verläuft, so daß damit zusätzlich den Anbrennerscheinungen entgegengewirkt wird.

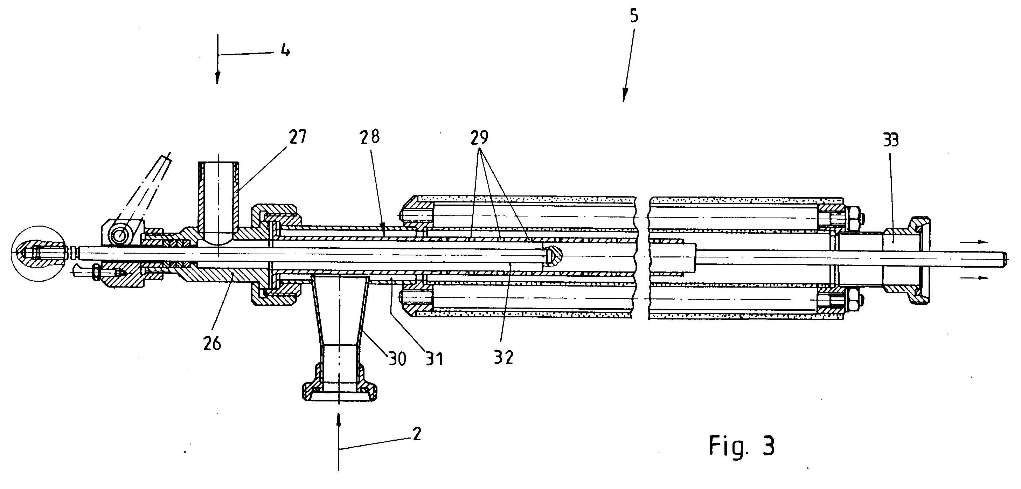

Figur 3 zeigt eine mögliche Ausführungsform der Einführeinrichtung 5. In einem Gehäuse 26 endet über eine Stutzen 27 die Leitung 4, über die Wasserdampf herangeführt wird. In einem ortsfest im Gehäuse 26 gelagerten Mischrohr 28 ist eine Vielzahl von Übertrittsöffnungen 29 über den Umfang und eine gewisse Strecke des Mischrohres 28 in Durchströmrichtung vorgesehen. Ein Stutzen 30 dient dem Anschluß der Rohrleitung 2 von der Pumpe 3, über den die Süßwarenmasse in einen Ringraum 31 um das Mischrohr 28 heraum eingebracht wird. Im Innern des Mischrohrs 28 ist ein Kolben 32 axial verschiebbar gelagert, so daß je nach seiner Relativlage zum Mischrohr 28 eine mehr oder weniger große Anzahl von Übertrittsöffnungen freigegeben bzw. abgedeckt werden. Die Einführeinrichtung 5 weist einen Ausgang 33 auf, durch den infolge der Kondensation des Wasserdampfs auf Siedetemperatur aufgeheizte Süßwarenmasse ausströmt. Der Ausgang 33 kann unmittelbar mit der Eingangszone 8 des Wärmetauschers 6 verbunden sein. Andererseits besteht die Möglichkeit, auch ein Stück Rohrleitung 2 zwischen der Einführeinrichtung 5 und dem Eingang des Wärmetauschers 6 vorzusehen, damit eine noch bessere Vermischung der aufgeheizten Süßwarenmasse bis zum Beginn der Eingangszone 8 am Wärmetauscher 6 stattfindet.

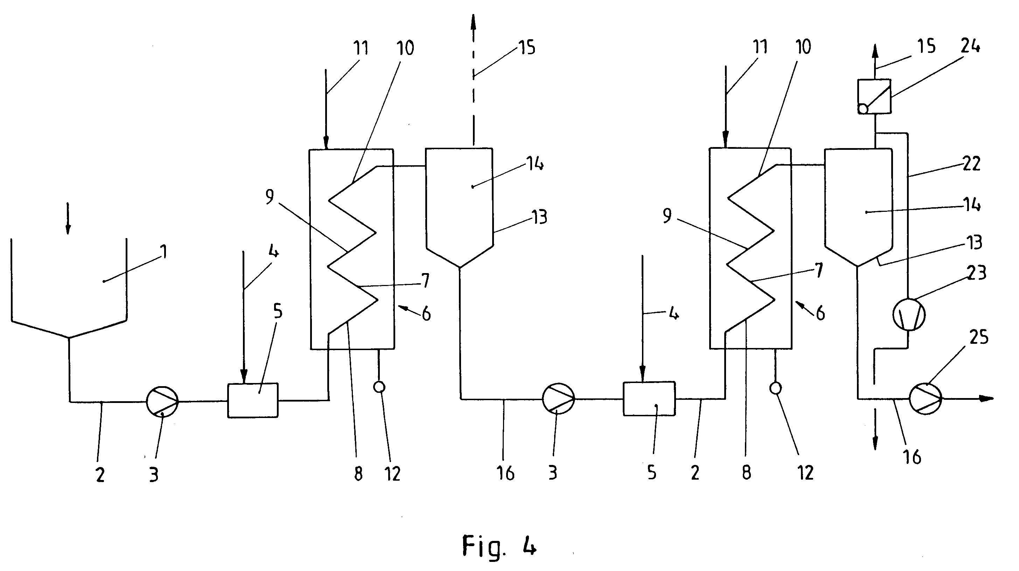

Das beschriebene Verfahren kann auch mehrstufig durchgeführt werden. So zeigt beispielsweise die Figur 4 eine Anlage, mit der in einem ersten Schritt die Süßarenmasse unter Normaldruck durch einen ersten Wärmetauscher 6 geführt wird, während in einem zweiten Schritt bzw. einer zweiten Stufe Unterdruck Anwendung findet. Bezüglich des Aufbaus und der Funktionsweise der beiden Stufen kann auf die Beschreibung der Figuren 1 und 2 verwiesen werden. Es versteht sich, daß auch mehrere unter Normaldruck arbeitende Stufen oder mehrere, jeweils unter Unterdruck arbeitende Stufen in einer Anlage vorgesehen sein können.

### Bezugszeichenliste:

- 1: = Behälter
- 2: = Rohrleitung
- 3: = Pumpe
- 4: = Leitung
- 5: = Einführeinrichtung
- 6: = Wärmetauscher
- 7: = Heizschlange
- 8: = Eingangszone
- 9: = Mittelzone
- 10: = Ausgangszone
- 11: = Leitung
- 12: = Ablaß
- 13: = Auffangbehälter
- 14: = Ausdampfraum
- 15: = Brüdenrohrleitung
- 16: = Rohrleitung
- 17: = Manometer
- 18: = Druckregulierventil
- 19: = Dampfzufuhrventil
- 20: = Dampfmengenmesser
- 21: = Manometer
- 22: = Leitung
- 23: = Pumpe
- 24: = Sicherheitsabsperrvorrichtung
- 25: = Pumpe
- 26: = Gehäuse
- 27: = Stutzen
- 28: = Mischrohr
- 29: = Übertrittsöffnung
- 30: = Stutzen
- 31: = Ringraum
- 32: = Kolben
- 33: = Ausgang

## Patentansprüche

1. Verfahren zur Wärmebehandlung einer pumpbaren Süßwarenmasse, insbesondere Milchkaramelmasse, die durch die Heizschlange eines einen dampfbeheizten Raum aufweisenden Wärmetauschers gefördert wird, wobei der zu behandelnden Süßwarenmasse bei Eintritt in den Wärmetauscher ein Medium zugegeben und die aus dem Wärmetauscher austretende Süßwarenmasse in einen Auffangbehälter geleitet wird, in welchem das Medium aus der Süßwarenmasse entweichen kann, dadurch gekennzeichnet, daß der Süßwarenmasse als Medium Wasserdampf hinzugefügt wird, durch dessen Kondensation die Temperatur der Süßwarenmasse bis mindestens in den Bereich ihrer Siedetemperatur, vorzugsweise über ihre Siedetemperatur, angehoben wird.

2. Verfahren nach Anspruch 1, dadurch gekennzeichnet, daß der Süßwarenmasse Wasserdampf in solcher Menge, Temperatur und Druck hinzugefügt wird, daß die Süßwarenmasse bereits am Anfang der Heizschlange des Wärmetauschers siedet.

3. Verfahren nach Anspruch 1 oder 2, dadurch gekennzeichnet, daß der Wasserdampf der Süßwarenmasse bevorzugt in wandnahen Bereichen hinzugefügt wird.

4. Verfahren nach einem oder mehreren der Ansprüche 1 bis 3, dadurch gekennzeichnet, daß der Wasserdampf in Form von Sattdampf hinzugefügt wird.

5. Vorrichtung zur Durchführung des Verfahrens nach einem oder mehreren der Ansprüche 1 bis 4, mit einem eine Heizschlange (7) aufweisenden dampfbeheizten Wärmetauscher (6) und einem nachgeschalteten Auffangbehälter (13) für die Süßwarenmasse, dadurch gekennzeichnet, daß am Einlaß für die Süßwarenmasse in den Wärmetauscher (6) eine Einführeinrichtung (5) für Wasserdampf vorgesehen ist.

6. Vorrichtung nach Anspruch 5, dadurch gekennzeichnet, daß mehrere Wärmetauscher (6) mit jeweils vorgeschalteten Einführeinrichtungen (5) zur stufenweisen Erwärmung der Süßwarenmasse vorgesehen sind.

7. Vorrichtung nach einem oder mehreren der Ansprüche 5 und 6, dadurch gekennzeichnet, daß die Einführeinrichtung (5) zum fein verteilten Einbringen des Wasserdampfs in die Süßwarenmasse eine Vielzahl von über Umfang und/oder Länge verteilt angeordneter Übertrittsöffnungen (29) aufweist.

## Claims

1. A process for the heat treatment of a pumpable candy mass, specifically milk-caramel mass, which is conveyed through the heating coil of a heat exchanger having a steam heated chamber, whereby a medium is added to the candy mass, to be treated, upon entry into the heat exchanger and the heat exchanger exiting candy mass is guided into a receiving tank which allows for the medium to escape the candy mass, **wherein** the medium which is added to the candy mass is steam and that by its condensation the temperature of the candy mass is elevated at least into the vicinity of its boiling point, preferably beyond its boiling point.

2. The process of claim 1, **wherein** the steam is supplied to the candy mass at such quantity, temperature and pressure that the candy mass boils already upon entry into the heat exchanger.

3. The process of claim 1 or 2, **wherein** preferably the steam is added to the candy mass in areas near the wall.

4. The process of one or more of the claims 1 through 3, **wherein** the steam is added in form of saturated steam.

5. An device to perform this process of one or more of the claims 1 through 4, having a steam heated heat exchanger (6) with a heating coil (7) and a receiving tank (13) for the candy mass, located downstream, **wherein** a steam blending head (5) is provided for the candy mass at the entry into the heat exchanger (6).

6. The device of claim 5, **wherein** several heat exchangers (6) with corresponding preceding blending heads (5) are provided to heat the candy mass in stages.

7. The device of one or several of the claims 5 and 6, **wherein** the blending head (5) carries a plurality of cross flow passages (29), distributed over the circumference and/or length, to let the steam enter into the candy mass in a finely dispersed fashion.

## Revendications

1. Procédé de traitement thermique d'une pâte de confiserie pompable, en particulier une pâte de caramel au lait qui est envoyée à travers le serpentin d'un échangeur de chaleur comportant une chambre chaffée à la vapeur, dans lequel un fluide est ajouté à la pâte de confiserie à traiter, à l'entrée de l'échangeur de chaleur et la pâte de confiserie sortant de l'échangeur de chaleur est acheminée vers un collecteur dans lequel le fluide peut s'échapper de la pâte de confiserie, caractérisé en ce qu'on ajoute à la pâte de confiserie, comme fluide de la vapeur d'eau dont la condensation augmente la température de la pâte de confiserie jusqu'au voisinage au moins de sa température d'ébullition, de préférence au-dessus de celle-ci.

2. Procédé selon la revendication 1, caractérisé en ce qu'à la pâte de confiserie on ajoute de la vapeur d'eau dans une quantité à une température et à une pression telles que la pâte de confiserie bout déjà au début du serpentin de l'échangeur de chaleur.

3. Procédé selon la revendication 1 ou 2, caractérisé en ce que la vapeur d'eau est ajoutée à la pâte de confiserie de préférence dans des zones proches des parois.

4. Procédé selon une ou plusieurs des revendications 1 à 3, caractérisé en ce que la vapeur d eau est ajoutée sous forme de vapeur saturée.

5. Dispositif pour la mise en oeuvre du procédé selon une ou plusieurs des revendications 1 à 4, comportant un échangeur de chaleur (6) chauffé à la vapeur, présentant un serpentin de chauffage (7) et comportant un collecteur (13) monté en aval pour la pâte de confiserie, caractérisé en ce qu'à l'entrée de la pâte de confiserie dans l'échangeur de chaleur (6) il est prévu un dispositif d'introduction (5) pour la vapeur d'eau.

6. Dispositif selon la revendication 5 caractérisé en ce que sont prévus plusieurs échangeurs de chaleur (6) avec chacun des dispositifs d'introduction (5) montés en amont pour chauffer progressivement la pâte de confiserie.

7. Procédé selon la revendication 5 et/ou 6, caractérisé en ce que le dispositif d' introduction (5) comporte pour l'introduction finement répartie de la vapeur d'eau dans la pâte de confiserie, un grand nombre d'orifices de transfert (29) répartis sur le pourtour et/ou la longueur.
